# EUROPEAN PATENT APPLICATION

(11) **EP 4 697 844 A1**
(43) Date of publication of application: **18.02.2026**
(21) Application number: 24810252.7
(22) Date of filing: 13.05.2024
(51) Int. Cl.: H04W 72/542, H04W 72/12

(54) **COMMUNICATION METHOD AND APPARATUS**

(30) Priority: 22.05.2023 CN 202310577211; 24.06.2023 CN 202310747841
(71) Applicant: Huawei Technologies Co., Ltd., Shenzhen, Guangdong 518129 (CN)
(72) Inventor: WEI, Xiuhong, Shenzhen, Guangdong 518129 (CN); LI, Xueru, Shenzhen, Guangdong 518129 (CN)
(74) Representative: Thun, Clemens
(86) International application number: PCT/CN2024/092899
(87) International publication number: WO 2024/240005

(57) **Abstract**

This application relates to a communication method and an apparatus. A sensing device receives a first signal in at least one last time subunit in a first time unit and a first frequency domain unit set, and measures the first signal. The sensing device sends a first sensing signal in a second time unit and a second frequency domain unit set when a measurement result of the first signal meets a first condition, where the second time unit is a next time unit of the first time unit. For example, if the second time unit is not occupied by another device, the sensing device may send SL signals in the second time unit; or if the second time unit is occupied by another device, the sensing device may not send SL signals in the second time unit. In this manner, a probability of resource collision can be reduced, and SL signal transmission quality can be improved.

## Description

### CROSS-REFERENCE TO RELATED APPLICATIONS

This application claims priorities to Chinese Patent Application No. 202310577211.0, filed with the China National Intellectual Property Administration on May 22, 2023 and entitled "INTERFERENCE MEASUREMENT METHOD AND DEVICE", and to Chinese Patent Application No. 202310747841.8, filed with the China National Intellectual Property Administration on June 24, 2023 and entitled "COMMUNICATION METHOD AND APPARATUS", both of which are incorporated herein by reference in their entireties.

### TECHNICAL FIELD

This application relates to the field of communication technologies, and in particular, to a communication method and an apparatus.

### BACKGROUND

In sidelink (sidelink, SL), interference between user equipments (user equipments, UEs) is avoided mainly by using mechanisms of resource listening and resource selection. For example, a UE sends sidelink control information (sidelink control information, SCI), where the SCI may indicate resources reserved by the UE. Other UEs can avoid, by listening to the SCI, the resources reserved by the UE, to reduce interference between the UEs.

Currently, there is another type of UEs: sensing UEs, which can perform sensing by using SL time-frequency resources. For example, a UE may send sensing reference signals by using SL time-frequency resources, and may sense information such as a distance from a target and a speed of the target by receiving echoes of the sensing reference signals. Current SL protocols are mainly designed for a communication function. However, the introduction of a sensing function necessitates considering scenarios in which sensing and communication coexist.

In many sensing scenarios (for example, home sensing scenarios or industrial application scenarios), only simple radar sensing module are typically configured for sensing UEs in order to limit costs, and functional modules like channel encoding/decoding modules, modulation/demodulation modules are not configured for them. Therefore, the sensing UEs may be incapable of parsing SCI from communication UEs, and consequently cannot learn of resources reserved by the communication UEs. Consequently, during resource selection, the sensing UEs cannot avoid the resources already reserved by the communication UE, leading to a higher probability of resource collision.

### SUMMARY

Embodiments of this application provide a communication method and an apparatus, to reduce a probability of resource collision.

According to a first aspect, a first communication method is provided. The method may be performed by a sensing device, may be performed by another device including a function of the sensing device, or may be performed by a chip system (or a chip) or another functional module. The chip system or the functional module can implement the function of the sensing device, and the chip system or the functional module is disposed, for example, in the sensing device. The sensing device is, for example, a network device or a terminal device. The method includes: receiving a first signal in at least one last time subunit in a first time unit and a first frequency domain unit set; measuring the first signal; and sending a first sensing signal in a second time unit and a second frequency domain unit set when a measurement result of the first signal meets a first condition, where the second time unit is a next time unit of the first time unit, and the first frequency domain unit set and the second frequency domain unit set do not overlap.

In this embodiment of this application, the sensing device may receive (or detect) a signal in at least one last time subunit in a previous time unit (the first time unit) of a selected time unit (the second time unit), and the sensing device may determine, based on the received signal, whether the second time unit selected by the sensing device is occupied by another device. For example, if the second time unit is not occupied by another device, the sensing device may send an SL signal in the second time unit; or if the second time unit is occupied by another device, the sensing device may not send an SL signal in the second time unit. In this manner, a probability of resource collision can be reduced, and SL signal transmission quality can be improved.

In an optional implementation, the first frequency domain unit set belongs to a first resource pool, and the first resource pool includes one or more interlaces, or includes one or more subchannels; and/or the second frequency domain unit set belongs to a second resource pool, and the second resource pool includes one or more interlaces, or includes one or more subchannels. The first resource pool is different from the second resource pool, or the first resource pool and the second resource pool do not overlap in frequency domain. For example, the first resource pool and the second resource pool may be frequency division multiplexed, or the second resource pool may be of an interlace in frequency domain, and the first resource pool interlaces with the second resource pool. In this way, the second resource pool may occupy a large bandwidth in frequency domain, but may occupy a small quantity of frequency domain resources, so that a large bandwidth is implemented, and a capacity of a communication resource pool is not affected.

In an optional implementation, when the first resource pool includes one or more interlaces, and the second resource pool includes one or more interlaces, the interlace included in the first resource pool is adjacent to the interlace included in the second resource pool in frequency domain. It may be understood as that the first resource pool interlaces with the second resource pool.

In an optional implementation, the first frequency domain unit set and the second frequency domain unit set are included in a range of a second bandwidth, and the second bandwidth includes one or more first bandwidths.

In an optional implementation, the second bandwidth is a bandwidth of the second frequency domain unit set; the second bandwidth is a bandwidth of a BWP currently activated by the sensing device; or the second bandwidth is a bandwidth supported by the sensing device.

In an optional implementation, the first bandwidth is a bandwidth of a single radio frequency link supported by the sensing device.

For example, if the sensing device can transmit one SL signal by using one first bandwidth, the sensing device can transmit one or more SL signals by using the second bandwidth.

In an optional implementation, the first signal includes M signals, M is a positive integer, each of the M signals occupies a first bandwidth, and the first condition includes: A measurement value of any one of the M signals is less than a first threshold; a measurement value of each of the M signals is less than a first threshold; or a total measurement value of the M signals is less than a second threshold. The sensing device may determine, based on the measurement value of any one of the M signals, whether to send a sensing signal in the second time unit, so that the sensing device does not need to measure excessive signals, power consumption of the sensing device can be reduced, and a processing delay can be reduced. Alternatively, the sensing device may determine, based on the measurement value of each of the M signals, whether to send a sensing signal in the second time unit, so that accuracy of a determining result can be improved. Alternatively, the sensing device may determine, based on the total measurement value of the M signals, whether to send a sensing signal in the second time unit, so that determining accuracy can be improved. In addition, determining may be performed based on a total measurement value, there is no need to perform excessive determining processes, and complexity can be reduced.

In an optional implementation, the second frequency domain unit set is a frequency domain component in the first bandwidth or the second bandwidth when the measurement value of any one of the M signals is less than the first threshold; the second frequency domain unit set is a frequency domain component in the second bandwidth when the measurement value of each of the M signals is less than the first threshold; or the second frequency domain unit set is a frequency domain component in the second bandwidth when the total measurement value of the M signals is less than the second threshold. The measurement value of any one of the M signals may reflect a receiving and sending status in the first bandwidth, and the receiving and sending status in the first bandwidth may also be considered as sampling of a receiving and sending status in the second bandwidth. Therefore, the measurement value may be used to determine whether to send a sensing signal in the first bandwidth, or may be used to determine whether to send the sensing signal in the second bandwidth. This is flexible. The measurement value of each of the M signals or the total measurement value of the M signals can reflect an overall receiving and sending status in the second bandwidth, and therefore may be used to determine whether to send the sensing signal in the second bandwidth.

In an optional implementation, that the second frequency domain unit set is the frequency domain component in the first bandwidth when the measurement value of any one of the M signals is less than the first threshold includes: The second frequency domain unit set is a frequency domain component in a first bandwidth corresponding to any signal when the measurement value of any one of the M signals is less than the first threshold. Different signals in the M signals respectively correspond to respective first bandwidths. A measurement value of a signal can directly reflect whether a first bandwidth corresponding to the signal is idle. Therefore, if a measurement value of a signal is less than the first threshold, a sensing signal may be sent on a frequency domain component in a first bandwidth corresponding to the signal.

In an optional implementation, the first threshold and/or the second threshold are/is related to one or more of a service to which the first sensing signal belongs, the first bandwidth, or the second bandwidth. The first threshold and/or the second threshold may be predefined in a protocol, may be configured by the network device, may be preconfigured in the sensing device, or may be configured in another manner.

In an optional implementation, receiving the first signal in the at least one last time subunit in the first time unit includes: receiving the first signal in first duration in a last time subunit in the first time unit, where the first duration is less than duration of one time subunit. Because the last time subunit is further used for receive/transmit transition, a communication device may occupy only the first duration in the last time subunit to send a signal, and the sensing device may also detect (or receive) the signal only in the first duration. Remaining duration other than the first duration in the last time subunit may be further used to perform receive/transmit transition, to ensure a normal communication process of the communication device.

In an optional implementation, the method further includes: receiving a second signal in a 1^{st} time subunit in the second time unit; and sending the first sensing signal in the second time unit and the second frequency domain unit set when the measurement result of the first signal meets the first condition includes: sending the first sensing signal in the second time unit and the second frequency domain unit set when the measurement result of the first signal and a measurement result of the second signal meet the first condition. In addition to performing interference measurement in the at least one last time unit in the first time unit, the sensing device may also perform interference measurement in the 1^{st} time subunit in the second time unit, so that a result of the interference measurement is more accurate.

In an optional implementation, a 2^{nd} time subunit in the second time unit is used for automatic gain control. If the sensing device also performs interference measurement in the 1^{st} time subunit in the second time unit, the sensing device may only receive an SL signal but does not send the SL signal in the 1^{st} time subunit. For a communication device, if an existing time unit structure is still used, that is, AGC is performed in the 1^{st} time subunit, adjustment of a power amplifier may be inaccurate. Therefore, if the sensing device does not send the SL signal in a 1^{st} time subunit in a time unit, a structure of the time unit may be correspondingly changed. For example, the 2^{nd} time subunit in the second time unit may be used for AGC, to improve accuracy of an AGC result.

In an optional implementation, the first signal is a CPE. Alternatively, the first signal may be another SL signal, for example, SL control information and/or SL data. This is not limited.

According to a second aspect, a second communication method is provided. The method may be performed by a sensing device, may be performed by another device including a function of the sensing device, or may be performed by a chip system (or a chip) or another functional module. The chip system or the functional module can implement the function of the sensing device, and the chip system or the functional module is disposed, for example, in the sensing device. The sensing device is, for example, a network device or a terminal device. The method includes: receiving a second signal in a 1^{st} time subunit in a second time unit and a third frequency domain unit set; measuring the second signal; and sending a first sensing signal in the second time unit and a second frequency domain unit set when a measurement result of the second signal meets a first condition, where the third frequency domain unit set and the second frequency domain unit set do not overlap.

In an optional implementation, the third frequency domain unit set belongs to a third resource pool, and the third resource pool includes one or more interlaces, or includes one or more subchannels; and/or the second frequency domain unit set belongs to a second resource pool, and the second resource pool includes one or more interlaces, or includes one or more subchannels. The third resource pool is different from the second resource pool, or the third resource pool and the second resource pool do not overlap in frequency domain.

In an optional implementation, when the third resource pool includes one or more interlaces, and the second resource pool includes one or more interlaces, the interlace included in the third resource pool is adjacent to the interlace included in the second resource pool in frequency domain.

In an optional implementation, the second frequency domain unit set and the third frequency domain unit set are included in a range of a second bandwidth, and the second bandwidth includes one or more first bandwidths.

In an optional implementation, the second bandwidth is a bandwidth of the second frequency domain unit set; the second bandwidth is a bandwidth of a BWP currently activated by the sensing device; or the second bandwidth is a bandwidth supported by the sensing device.

In an optional implementation, the first bandwidth is a bandwidth of a single radio frequency link supported by the sensing device.

In an optional implementation, a 2^{nd} time subunit in the second time unit is used for automatic gain control.

In an optional implementation, the second signal includes N signals, N is a positive integer, each of the N signals occupies a first bandwidth, and the first condition includes: A measurement value of any one of the N signals is less than a first threshold; a measurement value of each of the N signals is less than a first threshold; or a total measurement value of the N signals is less than a second threshold.

In an optional implementation, the second frequency domain unit set is a frequency domain component in the first bandwidth or the second bandwidth when the measurement value of any one of the N signals is less than the first threshold; the second frequency domain unit set is a frequency domain component in the second bandwidth when the measurement value of each of the N signals is less than the first threshold; or the second frequency domain unit set is a frequency domain component in the second bandwidth when the total measurement value of the N signals is less than the second threshold.

In an optional implementation, that the second frequency domain unit set is the frequency domain component in the first bandwidth when the measurement value of any one of the N signals is less than the first threshold includes: The second frequency domain unit set is a frequency domain component in a first bandwidth corresponding to any signal when the measurement value of any one of the N signals is less than the first threshold.

In an optional implementation, the first threshold and/or the second threshold are/is related to one or more of a service to which the first sensing signal belongs, the first bandwidth, or the second bandwidth.

In an optional implementation, sending the first sensing signal in the second time unit and the second frequency domain unit set includes: sending the first sensing signal in the second frequency domain unit set by using the 2^{nd} time subunit in the second time unit as a start time domain position.

In an optional implementation, the method further includes: receiving a first signal in at least one last time subunit in a first time unit, where the first time unit is a previous time unit of the second time unit; and sending the first sensing signal in the second time unit and the second frequency domain unit set when the measurement result of the second signal meets the first condition includes: sending the first sensing signal in the second time unit and the second frequency domain unit set when a measurement result of the first signal and the measurement result of the second signal meet the first condition.

In an optional implementation, receiving the first signal in the at least one last time subunit in the first time unit includes: receiving the first signal in first duration in a last time subunit in the first time unit, where the first duration is less than duration of one time subunit.

In an optional implementation, the first signal is a CPE.

For technical effects brought by the second aspect or the optional implementations, refer to descriptions of the technical effects of the first aspect or the corresponding implementations.

According to a third aspect, a third communication method is provided. The method may be performed by a communication system. The communication system includes, for example, a sensing device, or includes a chip system (or a chip) or another functional module that can implement a function of the sensing device. The chip system or the functional module can implement the function of the sensing device, and the chip system or the functional module is disposed, for example, in the sensing device. In addition, the communication system may further include a communication device, or include a chip system (or a chip) or another functional module that can implement a function of the communication device. The chip system or the functional module can implement the function of the communication device. The chip system or the functional module is disposed, for example, in the communication device. The sensing device is, for example, a network device or a terminal device. The communication device is, for example, a network device or a terminal device. The method includes: The communication device sends a first signal in at least one last time subunit in a first time unit and a first frequency domain unit set; the sensing device receives the first signal; the sensing device measures the first signal; and the sensing device sends a first sensing signal in a second time unit and a second frequency domain unit set when a measurement result of the first signal meets a first condition, where the second time unit is a resource selected by the communication device for sending sidelink data, the second time unit is a next time unit of the first time unit, and the first frequency domain unit set and the second frequency domain unit set do not overlap.

In an optional implementation, transmit power of the communication device in each of the at least one last time subunit is equal to transmit power of the communication device in each time subunit in the second time unit. In this way, a measurement result of the sensing device can accurately reflect interference caused by the communication device.

In an optional implementation, the communication device does not perform LBT, and the at least one last time subunit is a last time subunit. If the communication device does not perform LBT, the communication device cannot determine whether the first time unit is occupied by another device. To reduce impact on another device, the communication device may send the first signal only in the last time subunit.

In an optional implementation, that the communication device sends the first signal in the at least one last time subunit in the first time unit and the first frequency domain unit set includes: The communication device sends the first signal in first duration in the last time subunit in the first time unit and the first frequency domain unit set, where the first duration is less than duration of one time subunit.

In an optional implementation, the first time unit or a 2^{nd} time subunit in the second time unit is used for automatic gain control.

In an optional implementation, the first signal is a CPE.

For technical effects brought by the third aspect or the optional implementations, refer to descriptions of the technical effects of the first aspect or the corresponding implementations.

According to a fourth aspect, a fourth communication method is provided. The method may be performed by a communication system. The communication system includes, for example, a sensing device, or includes a chip system (or a chip) or another functional module that can implement a function of the sensing device. The chip system or the functional module can implement the function of the sensing device, and the chip system or the functional module is disposed, for example, in the sensing device. In addition, the communication system may further include a communication device, or include a chip system (or a chip) or another functional module that can implement a function of the communication device. The chip system or the functional module can implement the function of the communication device. The chip system or the functional module is disposed, for example, in the communication device. The sensing device is, for example, a network device or a terminal device. The communication device is, for example, a network device or a terminal device. The method includes: The communication device sends a second signal in a second time unit, where a 2^{nd} time subunit in the second time unit is used for automatic gain control; the sensing device receives the second signal in a 1^{st} time subunit in the second time unit and a third frequency domain unit set; the sensing device measures the second signal; and the sensing device sends a first sensing signal in the second time unit and a second frequency domain unit set when a measurement result of the second signal meets a first condition, where the third frequency domain unit set and the second frequency domain unit set do not overlap.

In an optional implementation, the method further includes: The communication device sends a first signal in at least one last time subunit in a first time unit and a first frequency domain unit set, where the first signal is used by the sensing device to perform interference measurement, and a next time unit of the first time unit is the second time unit.

In an optional implementation, the communication device does not perform LBT, and the at least one last time subunit is a last time subunit.

In an optional implementation, that the communication device sends the first signal in the at least one last time subunit in the first time unit and the first frequency domain unit set includes: The communication device sends the first signal in first duration in the last time subunit in the first time unit and the first frequency domain unit set, where the first duration is less than duration of one time subunit.

In an optional implementation, the first signal is a CPE.

For technical effects brought by the fourth aspect or the optional implementations, refer to descriptions of the technical effects of the first aspect or the corresponding implementations.

According to a fifth aspect, a communication apparatus is provided. The communication apparatus may be the sensing device according to any one of the first aspect to the fourth aspect. The communication apparatus has a function of the sensing device. The communication apparatus is, for example, a sensing device, a large device including the sensing device, or a functional module in the sensing device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive a first signal in at least one last time subunit in a first time unit and a first frequency domain unit set; the processing unit is configured to measure the first signal; and the transceiver unit (or the sending unit) is configured to send a first sensing signal in a second time unit and a second frequency domain unit set when a measurement result of the first signal meets a first condition, where the second time unit is a next time unit of the first time unit, and the first frequency domain unit set and the second frequency domain unit set do not overlap.

In an optional implementation, the transceiver unit (or the receiving unit) is configured to receive a second signal in a 1^{st} time subunit in a second time unit and a third frequency domain unit set; the processing unit is configured to measure the second signal; and the transceiver unit (or the sending unit) is configured to send a first sensing signal in the second time unit and a second frequency domain unit set when a measurement result of the second signal meets a first condition, where the third frequency domain unit set and the second frequency domain unit set do not overlap.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the sensing device according to any one of the first aspect to the fourth aspect.

According to a sixth aspect, a communication apparatus is provided. The communication apparatus may be the communication device according to any one of the first aspect to the fourth aspect. The communication apparatus has a function of the communication device. The communication apparatus is, for example, a communication device, a large device including the communication device, or a functional module in the communication device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions of the fifth aspect.

In an optional implementation, the transceiver unit (or a sending unit) is configured to send a first signal in at least one last time subunit in a first time unit and a first frequency domain unit set, where the first signal is used by a sensing device to perform interference measurement.

In an optional implementation, the transceiver unit (or a receiving unit) is configured to send a second signal in a second time unit, where a 2^{nd} time subunit in the second time unit is used for automatic gain control.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the communication device according to any one of the first aspect to the fourth aspect.

According to a seventh aspect, a communication apparatus is provided. The communication apparatus may be a sensing device, or may be a chip or a chip system used in the sensing device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the sensing device in the foregoing aspects.

According to an eighth aspect, a communication apparatus is provided. The communication apparatus may be a communication device, or may be a chip or a chip system used in the communication device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the communication device in the foregoing aspects.

According to a ninth aspect, a communication system is provided, and includes a sensing device and a communication device. The sensing device is configured to perform the method performed by the sensing device in the foregoing aspects, and the communication device is configured to perform the method performed by the communication device in the foregoing aspects. For example, the sensing device may be implemented by using the communication apparatus according to the fifth aspect or the seventh aspect, and the communication device may be implemented by using the communication apparatus according to the sixth aspect or the eighth aspect.

According to a tenth aspect, a computer-readable storage medium is provided. The computer-readable storage medium is configured to store a computer program or instructions. When the computer program or the instructions are run, the method performed by the sensing device or the communication device in the foregoing aspects is implemented.

According to an eleventh aspect, a computer program product including instructions is provided. When the computer program product runs on a computer, the methods in the foregoing aspects are implemented.

According to a twelfth aspect, a chip system is provided, and includes a processor and an interface. The processor is configured to invoke instructions from the interface and run the instructions, to enable the chip system to implement the methods in the foregoing aspects.

### BRIEF DESCRIPTION OF DRAWINGS

FIG. 1 is a diagram of frequency division of a sensing resource pool and a communication resource pool;
FIG. 2 is a diagram of an application scenario according to an embodiment of this application;
FIG. 3 is a flowchart of a communication method according to an embodiment of this application;
FIG. 4 is a diagram of first duration according to an embodiment of this application;
FIG. 5 is a flowchart of another communication method according to an embodiment of this application;
FIG. 6A is a diagram in which a 1^{st} symbol in a slot in a sensing resource pool is not used for receiving or sending according to an embodiment of this application;
FIG. 6B is a diagram in which first two symbols in a slot in a communication resource pool are used for AGC according to an embodiment of this application;
FIG. 7 is a diagram of an apparatus according to an embodiment of this application; and
FIG. 8 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are intended to distinguish between a plurality of objects, and are not intended to limit sizes, content, a sequence, a time sequence, priorities, importance degrees, or the like of the plurality of objects. For example, a first signal and a second signal may be a same signal, or may be different signals. In addition, the names do not indicate that resources occupied by the two signals, or sending sequences, transmit ends/receive ends, content, sizes, application scenarios, priorities, importance degrees, or the like of the two signals are different. In addition, step numbers in embodiments described in this application are merely intended to distinguish between different steps, but are not intended to limit a sequence of the steps. For example, S301 may be performed before S302, may be performed after S302, or may be performed simultaneously with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, smart wearables, smart transportation, a smart city (smart city), an uncrewed aerial vehicle, and a robot. The terminal device may sometimes be referred to as a UE, a terminal, an access station, a UE station, a remote station, a wireless communication device, a user apparatus, or the like.

In embodiments of this application, a communication apparatus configured to implement a function of the terminal device may be the terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is the UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3^{rd} generation partnership project (3^{rd} generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following uses an example in which the access network device is the base station for description. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems using different access technologies may be different. This is not limited in embodiments of this application. A 5^{th} generation (5^{th} generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

In embodiments of this application, a sensing device may be configured to implement a sensing function. The sensing device may include a network device (which may be referred to as a sensing network device), a terminal device (which may be referred to as a sensing terminal device), or the like. In this specification, the sensing terminal device is mainly used as an example for description, and is referred to as a sensing UE. The "sensing UE" in the following may also be replaced with the "sensing network device". For example, the sensing UE is a radar. The sensing UE may not have a communication module. In this case, the sensing UE does not have a communication function. For example, the sensing UE does not have functional modules such as a channel encoding/decoding module and a modulation/demodulation module. Alternatively, the sensing UE may have a simple communication module, but the sensing UE has only a weak communication function, and cannot implement a complex communication function, for example, cannot parse SCI.

In embodiments of this application, a communication device may be configured to implement a communication function. The communication device may include a network device (which may be referred to as a communication network device), a terminal device (which may be referred to as a communication terminal device), or the like. In this specification, the communication terminal device is mainly used as an example for description, and is referred to as a communication UE. The "communication UE" in the following may also be replaced with the "communication network device". For example, a mobile phone, a wearable device, a vehicle-mounted device, or the like that has a communication function may be used as the communication device. In comparison with the sensing UE, the communication UE may have a communication module. Therefore, the communication UE has a communication function. For example, the communication UE has functional modules such as a channel encoding/decoding module and a modulation/demodulation module, and can implement a complex communication function.

The following describes technical features in embodiments of this application.

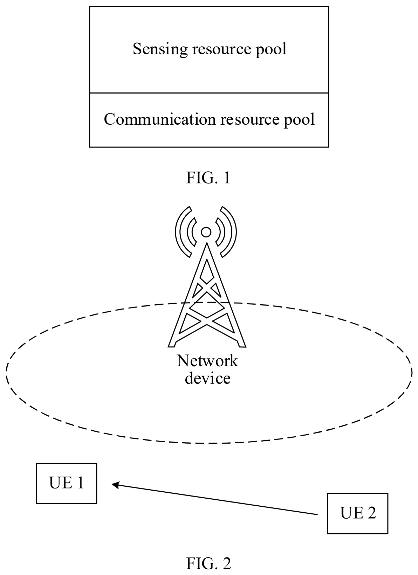

To support SL sensing, corresponding resources need to be first allocated to for transmission of SL sensing reference signals. To avoid conflicts between communication resources and sensing resources, a dedicated resource pool may be allocated for a sensing service. For example, a frequency division manner may be used for a sensing resource pool and a communication resource pool. As shown in FIG. 1, the two types of resource pools each occupy a segment of continuous bandwidth. In FIG. 1, an example in which the two resource pools are consecutive in frequency domain is used. The two resource pools may alternatively be inconsecutive in frequency domain.

Completely non-overlapping resource pools are configured or preconfigured for the sensing service and a communication service, to avoid simultaneous signal transmission performed by the communication UE and the sensing UE on a same time-frequency resource, and reduce interference between the two types of UEs in a same slot. Further, in each resource pool, different communication UEs or different sensing UEs may select different orthogonal resources to transmit signals, to avoid mutual interference between UEs of a same type. Currently, there are mainly two modes of SL resource allocation: network scheduling and UE selection. The first resource allocation mode is not applicable to scenarios where there is no network coverage. In the second resource allocation mode, a UE listens to SCI from other UEs in advance and measures corresponding received power, and the UE may select resources that have not been reserved by the other UEs or resources that have been reserved by the other UEs but measured received power is low, to avoid resource conflicts between different UEs in a same resource pool in advance.

There may also resource conflicts between different resource pools. For example, even if the communication UE and the sensing UE are located in different resource pools, and available resources do not overlap, adjacent frequency domain resources in the two resource pools still interfere with each other due to non-ideal factors such as non-linearity of a power amplifier (power amplifier, PA), phase noise, or quantization noise of an analog-to-digital converter (analog-to-digital converter, ADC). Due to the non-linearity of the PA, interference of the communication UE to the sensing UE may be far greater than interference of the sensing UE to the communication UE. Particularly, in comparison with the communication UE, the sensing UE using a self-transmitting and self-receiving mechanism may be more easily affected by the interference. Because an echo signal received by the sensing UE experiences a dual-link loss, and a received interference signal experiences only a single-link loss, a case in which power of the interference signal is much higher than that of a target signal is more likely to occur, and consequently, the target signal is overwhelmed by the interference signal. The foregoing mechanisms such as resource listening and resource selection can only be used to avoid interference in a same resource pool. Currently, there is no avoidance mechanism for interference between different resource pools.

In view of this, a sensing device in embodiments of this application may receive (or detect) a signal in at least one last time subunit in a previous time unit of a selected time unit, and the sensing device may determine, based on the received signal, whether the time unit selected by the sensing device is occupied by another device. For example, if the time unit is occupied by another device, the sensing device may not send SL data in the time unit. In this manner, a probability of resource collision can be reduced in a same resource pool or between different resource pools, and SL data transmission quality can be improved. In addition, in this manner, the sensing device does not need to parse a signal such as SCI, so that a sensing device with a low capability can also avoid interference according to the method, to simplify an implementation mechanism of the device.

The technical solutions provided in embodiments of this application may be applied to a 4^{th} generation (4^{th} generation, 4G) mobile communication technology system, for example, a long term evolution (long term evolution, LTE) system, may be applied to a 5G system, for example, a new radio (new radio, NR) system, or may be further applied to a next generation mobile communication system or another similar communication system, for example, a 6^{th} generation (6^{th} generation, 6G) mobile communication technology system. This is not specifically limited. In addition, the technical solutions provided in embodiments of this application may be applied to a device-to-device D2D scenario, for example, an NR-D2D scenario, or may be applied to a V2X scenario, for example, an NR-V2X scenario. For example, the technical solutions may be applied to fields such as factory manufacturing, whole-house intelligence, intelligent driving, assisted driving, or an intelligent connected vehicle.

FIG. 2 shows a communication network architecture to which an embodiment of this application is applicable. FIG. 2 includes a UE 1 and a UE 2. The UE 1 is, for example, a sensing UE, and the UE 2 is a communication UE. The UE 1 and the UE 2 may be located in coverage of a same network device, may be located in coverage of different network devices, or may be both located outside coverage of a network device. In FIG. 2, an example in which both the UE 1 and the UE 2 are located outside the coverage of the network device is used. Communication of the UE 2 may cause interference to sensing and/or positioning of the UE 1, and the interference can be reduced by using the solutions in embodiments of this application. In addition, the UE 1 may communicate with the UE 2. For example, the UE 1 can receive a signal from the UE 2, to perform interference measurement.

To better describe embodiments of this application, the following describes, with reference to the accompanying drawings, a method provided in embodiments of this application. In embodiments of this application, a time unit is, for example, a subframe (subframe), and a time subunit is, for example, a slot (slot), a mini-slot (mini-slot), an orthogonal frequency division multiplexing (orthogonal frequency division multiplexing, OFDM) symbol (symbol) group, or an OFDM symbol. Alternatively, a time unit is, for example, a slot, and a time subunit is, for example, a mini-slot, an OFDM symbol group, or an OFDM symbol. Alternatively, a time unit is, for example, a mini-slot, and a time subunit is, for example, an OFDM symbol group or an OFDM symbol. A frequency domain unit is, for example, a subchannel (subchannel), a physical resource block (physical resource block, PRB), or an interlace (interlace). One frequency domain unit set may include one or more subchannels, may include one or more PRBs, or may include one or more interlaces. In embodiments of this application, sensing is used as an example. Actually, there may alternatively be a process such as positioning. For example, "sensing" described below may also be replaced with "sensing and/or positioning". In embodiments of this application, the "interlace" may alternatively be replaced with "interleaving", "interleaving structure", "interlacing", or the like.

Unless otherwise specified below, in the accompanying drawings corresponding to embodiments of this application, steps represented by dashed lines are all optional steps. Methods provided in embodiments of this application may all be applied to the network architecture shown in FIG. 2. For example, a sensing device in embodiments of this application may be the UE 1 in FIG. 2, and a communication device in embodiments of this application may be the UE 2 in FIG. 2. In other words, in embodiments of this application, an example in which the sensing device is a UE is used. Actually, the sensing device is not limited thereto, and the sensing device may alternatively be a network device. In embodiments of this application, an example in which the communication device is a UE is used. Actually, the communication device is not limited thereto, and the communication device may alternatively be a network device.

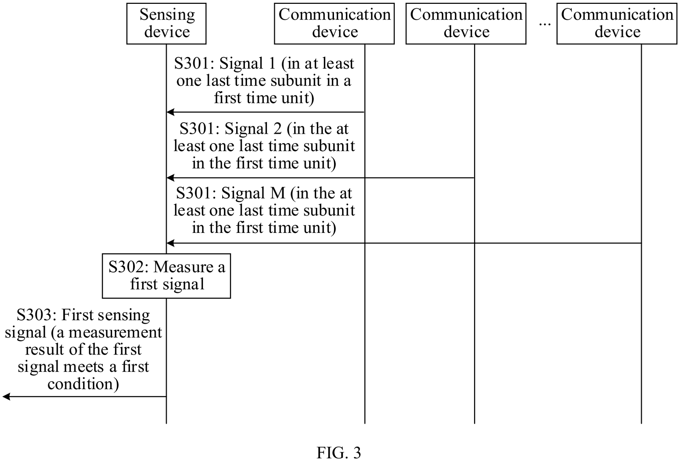

An embodiment of this application provides a communication method. FIG. 3 is a flowchart of the method.

S301: A sensing device receives a first signal in at least one last time subunit in a first time unit and a first frequency domain unit set. For example, the first signal includes M signals, and M is a positive integer. The M signals may be from one or more devices, for example, from one or more communication devices (this is used as an example in FIG. 3, for example, signals sent by the communication devices are respectively referred to as a signal 1, a signal 2, ..., and a signal M). A quantity of the one or more devices is less than or equal to M, or may be greater than M. For example, for the sensing device, the M signals may correspond to M radio frequency links supported by the sensing device. A bandwidth of one of the radio frequency links may include several frequency domain units. Different frequency domain units may be occupied by a same device or different devices. Alternatively, different radio frequency links may be used by the sensing device to perform transmission of an SL signal with a same device or different devices.

The M signals may occupy a same time domain resource, but occupy different frequency domain resources, that is, the M signals are distinguished from each other in a frequency. Optionally, any one of the M signals may be a cyclic shift extension (cyclic prefix extension, CPE). For example, each of the M signals is a CPE. Alternatively, a part or all of the M signals may be signals other than the CPE, for example, SL control information and/or SL data.

A next time unit (for example, referred to as a second time unit) of the first time unit may be a time unit selected by the sensing device for sending a sensing signal, and the sensing signal to be sent by the sensing device may be referred to as a first sensing signal. The sensing signal includes, for example, a control signal and/or a sensing reference signal. The control signal may include sidelink control information (sidelink control information, SCI), or include a control signal other than the sidelink control information. If the control signal includes the SCI, optionally, the SCI may be implemented in a form of a sequence (sequence). For example, if the sensing device has a to-be-sent first sensing signal, the sensing device performs resource selection, and selects a first resource from a resource pool configured for the sensing device. A time domain resource included in the first resource is the second time unit, and a frequency domain resource included in the first resource is a second frequency domain unit set. Before sending the sensing signal by using the first resource, the sensing device may perform signal detection in the at least one last time subunit in the previous time unit (the first time unit) of the second time unit, to determine whether the second time unit is occupied by another device (for example, the communication device). From this perspective, it may be considered that the M signals received by the sensing device are signals used for interference measurement.

A quantity of the at least one last time subunit may be greater than or equal to 1. If the quantity is equal to 1, the at least one last time subunit may be a last time subunit. Generally, a last time subunit in a time unit is a gap (GAP). Even if a communication device does not occupy the first time unit, a transmission process of a device that occupies the first time unit is not affected when the communication device sends a signal in the last time subunit in the first time unit. For example, if the communication device does not perform listen before talk (listen before talk, LBT), the communication device cannot learn whether another communication device occupies the first time unit. To reduce impact on the another communication device, the at least one last time subunit may be the last time subunit. In other words, the communication device may send the signal in the last time subunit in the first time unit. Alternatively, if the communication device performs LBT, the communication device can determine, through LBT, whether another communication device occupies the first time unit. If another communication device occupies the first time unit (for example, it is determined, through LBT, that the first time unit is busy), the at least one last time subunit may be the last time subunit. In other words, the communication device may send the signal in the last time subunit in the first time unit. Alternatively, if no other communication device occupies the first time unit (for example, it is determined, through LBT, that the first time unit is idle), the quantity of the at least one last time subunit may be greater than or equal to 1. In other words, the communication device may send the signal in the at least one last time subunit in the first time unit. In this case, the quantity of the at least one last time subunit may be independently determined by the communication device, may be predefined in a protocol, or may be preconfigured in the communication device and the sensing device.

Optionally, the sensing device receives the first signal in the last time subunit. An implementation includes: The sensing device receives the first signal in first duration in the last time subunit, where the first duration may be less than or equal to duration of one time subunit. Because the last time subunit is further used for receive/transmit transition, the communication device may occupy only the first duration in the last time subunit to send the signal, and the sensing device may also detect (or receive) the signal only in the first duration. Remaining duration other than the first duration in the last time subunit may be further used to perform receive/transmit transition, to ensure a normal communication process of the communication device. The first duration may be shortest duration that can be used by the communication device to send the signal. For example, the first duration may be configured by the sensing device or the communication device, may be determined by the sensing device and the communication device through negotiation, may be preconfigured in the sensing device and the communication device, or may be predefined in a protocol.

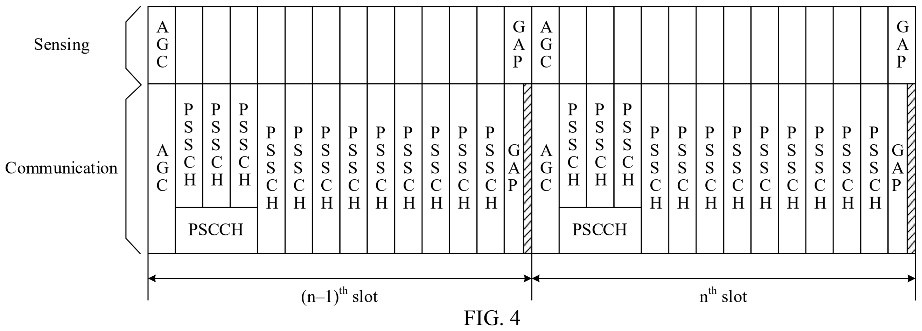

FIG. 4 is a diagram of the first duration. In FIG. 4, an example in which a time unit is a slot is used. In FIG. 4, a last symbol in a slot is a GAP, the first duration is shown by a slash area in FIG. 4, and the first duration is less than duration of one symbol.

The M signals may be carried in the first frequency domain unit set, and the first frequency domain unit set and the second frequency domain unit set may not overlap. For example, the first frequency domain unit set belongs to a first resource pool, and the second frequency domain unit set belongs to a second resource pool. The first resource pool is a resource pool configured for the communication device, and may be referred to as a communication resource pool. For example, the first resource pool includes one or more communication resource pools. The second resource pool is a resource pool configured for the sensing device, and may be referred to as a sensing resource pool. The first resource pool and the second resource pool may be frequency-divided, as shown in FIG. 1. In a case of frequency division, the first resource pool may include one or more subchannels, or include one or more PRBs; and the second resource pool may include one or more subchannels, or include one or more PRBs. Alternatively, the first resource pool and the second resource pool may be combed. For example, the second resource pool may include one or more interlaces, and/or the first resource pool may include one or more interlaces. In a combing manner, the sensing device may occupy only a small quantity of frequency domain resources while obtaining a large bandwidth, and spectrum utilization is high.

If the first resource pool and the second resource pool are combed, and both the first resource pool and the second resource pool include interlaces, optionally, the interlace included in the first resource pool is adjacent to the interlace included in the second resource pool in frequency domain. For example, the first resource pool includes interlaces whose indexes are 0, 2, 3, and 4, and the first resource pool includes an interlace whose index is 1. In this case, the interlace whose index is 1 is adjacent to both the interlaces whose indexes are 0 and 2 in frequency domain.

It can be learned that in this embodiment of this application, a scenario in which the communication resource pool and the sensing resource pool are frequency-divided (including a combing scenario) is mainly considered, and synchronization has been implemented between the communication device and the sensing device. In other words, time units of the two types of resource pools are aligned. If a sensing device A selects a frequency domain resource in a time unit n to perform a sensing service, and it is assumed that a communication device B also selects a frequency domain resource that is adjacent to the frequency domain resource selected by the sensing device A and that is in the time unit n to send data, the sensing device A is vulnerable to severe interference from the communication device B due to non-ideal factors such as in-band emission (in-band emission, IBE) and inter-subcarrier interference (inter-subcarrier interference, ICI) (for example, ICI interference caused by phase noise). Consequently, sensing performance is affected. Therefore, before sending the sensing signal, the sensing device may measure interference caused by the communication device. If the interference is excessively large, the sensing device may give up sending the sensing signal on a selected resource. However, if the sensing device performs interference measurement before the selected time unit n, an obtained measurement result may not be capable of reflecting interference actually received by the sensing device in the time unit n. This is because a UE occupies time domain resources at a granularity of time units. When a communication device transmits a signal in a time unit n-1, it does not mean that the communication device also transmits a signal in the time unit n. Similarly, if no communication device sends a signal in the time unit n-1, it does not mean that no communication device sends a signal in the time unit n.

Therefore, optionally, in this embodiment of this application, the communication device may send a signal in at least one last time subunit in each of one or more time units. The signal may be used by the sensing device to perform interference measurement. For example, the first signal may be used by the sensing device to perform interference measurement. A next time unit of each time unit is a time unit selected by the communication device for sending SL data. It can be learned that, if the communication device occupies a plurality of time units, the communication device may send a signal in at least one last time subunit in each of the plurality of time units, so that the sensing device performs interference measurement. Therefore, detection accuracy of the sensing device can be improved. For example, if a communication device continuously occupies a slot n to a slot n+3 to send SL data, the communication device may send a signal on a last OFDM symbol in each of a slot n-1 to the slot n+2, so that the sensing device performs interference measurement.

Optionally, transmit power used by the communication device to send the signal in the at least one last time subunit or transmit power of the communication device in each of the at least one last time subunit may be equal to transmit power of the communication device in each time subunit in the second time unit. In this way, a measurement result of the sensing device can accurately reflect the interference caused by the communication device.

The sensing device may detect a signal in a range of a second bandwidth. For example, the second frequency domain unit set is included in the range of the second bandwidth; or both the first frequency domain unit set and the second frequency domain unit set are included in the range of the second bandwidth. The second bandwidth is, for example, a bandwidth of the second frequency domain unit set (for example, if the second frequency domain unit set includes one or more interlaces, and each of the one or more interlaces may include at least one interlacing unit, the bandwidth of the second frequency domain unit set may be a bandwidth between a lowest-frequency interlacing unit and a highest-frequency interlacing unit that are included in the second frequency domain unit set), a bandwidth used by the sensing device to send the sensing signal in the second time unit, a bandwidth of a bandwidth part (bandwidth part, BWP) currently activated by the sensing device, or a bandwidth supported by the sensing device (for example, a total bandwidth supported by a capability of the sensing device). One or more BWPs may be configured for the sensing device. At a moment, generally, only one of the one or more BWPs is activated (a network device may indicate the sensing device to activate the BWP, or the sensing device independently activates the BWP). The sensing device operates on an activated BWP. A BWP, other than the BWP, configured for the sensing device is in a deactivated state. In addition, the deactivated BWP may also be activated, and the activated BWP may also be deactivated. For example, at a next moment, the sensing device may switch the BWP, that is, activate another configured BWP (where the BWP was previously in the deactivated state), and deactivate the previously activated BWP (where the BWP was previously in an active state). In this case, the sensing device operates on the newly activated BWP again. The second bandwidth may include one or more first bandwidths, and the first bandwidth is, for example, a bandwidth of a single radio frequency link supported by the sensing device. For example, the sensing device may receive one of the M signals in one first bandwidth, that is, the first bandwidth is in one-to-one correspondence with the signal received by the sensing device. For example, in S301, the sensing device receives M first signals in M first bandwidths, where the M first bandwidths are included in the second bandwidth. Optionally, that the sensing device receives the signal in one first bandwidth may be that the sensing device receives the signal on all frequency domain resources included in the first bandwidth, or may be that the sensing device receives the signal on a part of frequency domain resources included in the first bandwidth. Similarly, that the sensing device receives the first signal in the first frequency domain unit set may be that the sensing device receives the first signal on all frequency domain resources included in the first frequency domain unit set, or may be that the sensing device receives the first signal on a part of frequency domain resources included in the first frequency domain unit set.

S302: The sensing device measures the first signal.

In this embodiment of this application, before sending the sensing signal by using the first resource, the sensing device may perform signal detection in the at least one last time subunit in the first time unit, to determine whether the second time unit is occupied by another device (which is mainly the communication device). In a detection process, the sensing device may receive a signal from another device, or may not receive a signal from another device. If the sensing device does not receive a signal from another device in the detection process, S302 may not need to be performed. The sensing device may send the first sensing signal in the second time unit and the second frequency domain unit set, and in this case, it is considered that the second time unit is idle. Alternatively, if the sensing device receives a signal from another device in the detection process, for example, receives the first signal, the sensing device may measure the first signal. The sensing device may measure each of the M signals. For example, the sensing device may obtain one measurement value by measuring one signal. If the sensing device measures the M signals, M measurement values may be obtained, and the M measurement values are in one-to-one correspondence with the M signals. For example, the sensing device may measure a part or all of the M signals to obtain a measurement result. The measurement result may include measurement values of the part or all of the M signals.

S303: The sensing device sends the first sensing signal in the second time unit and the second frequency domain unit set when a measurement result of the first signal meets a first condition. The sensing device does not send the first sensing signal or any SL signal in the second time unit and the second frequency domain unit set when a measurement result of the first signal does not meet a first condition. A receive end of the first sensing signal may include a sensing device other than the sensing device and/or the sensing device.

For example, if the measurement result of the first signal meets the first condition, it indicates that the second time unit is idle, and therefore, the sensing device may send the first sensing signal in the second time unit. However, if the measurement result of the first signal does not meet the first condition, it indicates that the second time unit is busy, and the sensing device may not send the sensing signal in the second time unit, or the sensing device may not send any SL signal in the second time unit.

Optionally, the first condition includes that a measurement value of any one of the M signals is less than a first threshold, includes that a measurement value of each of the M signals is less than a first threshold, or includes that a total measurement value of the M signals is less than a second threshold.

For example, any one of the M signals is a third signal. When the measurement value of the third signal measured by the sensing device is greater than or equal to the first threshold, in the second time unit, the sensing device may not send the first sensing signal in the second frequency domain unit set. Alternatively, when the measurement value of the third signal measured by the sensing device is less than the first threshold, in the second time unit, the sensing device may send the first sensing signal in the second frequency domain unit set. In this case, the second frequency domain unit set is a frequency domain component in the first bandwidth. For example, transmission of the third signal occupies a part or all of frequency domain resources corresponding to one first bandwidth, and the first bandwidth is referred to as a first bandwidth A. Based on this determining result, the sensing device sends or does not send the first sensing signal on the frequency domain resource corresponding to the first bandwidth A. In other words, the sensing device may separately determine the M measurement values, and may determine, based on a determining result of one measurement value, whether to send the sensing signal on a first bandwidth corresponding to the measurement value. For example, if another signal in the M signals is a fourth signal, the measurement value of the third signal measured by the sensing device is greater than or equal to the first threshold, and a measurement value of the fourth signal is less than the first threshold, in the second time unit, the sensing device may not send the sensing signal in the first bandwidth corresponding to the third signal, but may send the sensing signal in a first bandwidth corresponding to the fourth signal. In this determining manner, a dependency relationship between sensing signals can be weakened, and a transmission delay of the sensing signal can be reduced.

Alternatively, when the measurement value of the third signal measured by the sensing device is greater than or equal to the first threshold, in the second time unit, the sensing device may not send the first sensing signal in the second frequency domain unit set. Alternatively, when the measurement value of the third signal measured by the sensing device is less than the first threshold, in the second time unit, the sensing device may send the first sensing signal in the second frequency domain unit set. In this case, the second frequency domain unit set is a frequency domain component in the second bandwidth. In other words, the sensing device may only determine any measurement value, and a determining result of the measurement value may be used to determine whether to send the sensing signal in the second bandwidth. In this determining manner, the sensing device may only measure any received signal, and does not need to measure all received signals, so that power consumption caused by measurement can be reduced.

Alternatively, when the measurement value of any one of the M signals measured by the sensing device is greater than or equal to the first threshold, in the second time unit, the sensing device may not send the first sensing signal in the second frequency domain unit set. Alternatively, when the measurement value of each of the M signals measured by the sensing device is less than the first threshold, in the second time unit, the sensing device may send the first sensing signal in the second frequency domain unit set. In this case, the second frequency domain unit set is a frequency domain component in the second bandwidth. In other words, the sensing device may determine each of the M measurement values, to determine whether to send the sensing signal in the second bandwidth, so that accuracy of a determining result can be improved.

Alternatively, when the total measurement value of the M signals measured by the sensing device is greater than or equal to the second threshold, in the second time unit, the sensing device may not send the first sensing signal in the second frequency domain unit set. Alternatively, when the total measurement value of the M signals measured by the sensing device is less than the second threshold, in the second time unit, the sensing device may send the first sensing signal in the second frequency domain unit set. In this case, the second frequency domain unit set is a frequency domain component in the second bandwidth. In this manner, the sensing device may measure all the M signals to obtain the M measurement values, and may obtain the total measurement value based on the M measurement values. For example, the total measurement value may be a sum of the M measurement values, may be a weighted sum of the M measurement values, may be an arithmetic average value or a weighted average value of the M measurement values, or may be a value obtained by using the M measurement values and another algorithm. In this determining manner, the sensing device may comprehensively determine, based on the total measurement value of the M signals, whether to send the sensing signal in the second bandwidth. This helps improve accuracy of a determining result.

Optionally, the frequency domain component in the first bandwidth may include all frequency domain resources corresponding to the first bandwidth. Alternatively, because a part of resources in all resources corresponding to the first bandwidth may belong to a communication resource pool, and adjacent-channel interference may be caused to the sensing device when the communication device transmits a signal by using these resources, the sensing device needs to perform interference measurement. Therefore, the frequency domain component in the first bandwidth may alternatively include a part of frequency domain resources corresponding to the first bandwidth. Alternatively, it is understood as that, that the sensing device sends a signal in one first bandwidth may be that the sensing device sends the signal on all frequency domain resources corresponding to the first bandwidth, or may be that the sensing device sends the signal on a part of frequency domain resources corresponding to the first bandwidth. Similarly, the frequency domain component in the second bandwidth may include all or a part of frequency domain resources corresponding to the second bandwidth. Alternatively, it is understood as that, that the sensing device sends a signal in the second bandwidth may be that the sensing device sends the signal on all frequency domain resources corresponding to the second bandwidth, or may be that the sensing device sends the signal on a part of frequency domain resources corresponding to the second bandwidth.

Optionally, the measurement value obtained by the sensing device may be accumulation of radio frequency power or accumulation of radio frequency energy of the signal, and does not need to be converted for baseband processing, to reduce a measurement delay. Alternatively, the measurement value may be reference signal received power (reference signal received power, RSRP).

The first threshold may be predefined in a protocol, configured by the sensing device or the communication device, negotiated by the sensing device and the communication device, or pre-configured in the sensing device (or the sensing device and the communication device). The second threshold may be predefined in the protocol, configured by the sensing device or the communication device, negotiated by the sensing device and the communication device, or pre-configured in the sensing device (or the sensing device and the communication device). The sensing device may obtain the first threshold and the second threshold in a same manner. For example, both the first threshold and the second threshold are predefined in the protocol. Alternatively, the sensing device may obtain the first threshold and the second threshold in different manners. For example, the first threshold is independently configured by the sensing device, and the second threshold is preconfigured in the sensing device.

Optionally, the first threshold and/or the second threshold may be related to one or more of a service to which the first sensing signal belongs, the first bandwidth, or the second bandwidth. For example, different services may correspond to a same first threshold or different first thresholds. A first threshold corresponding to a service with a high priority may be small, and a first threshold corresponding to a service with a low priority may be large. Therefore, a transmission delay of the service with a high priority can be reduced. For another example, different first bandwidths correspond to different first thresholds. If a first bandwidth is large, a corresponding first threshold may be large. If a first bandwidth is small, a corresponding first threshold may also be small.

In this embodiment of this application, optionally, the sensing device may not need to perform LBT. Therefore, the sensing device does not need to listen to a channel prematurely, and power consumption can be reduced. In addition, in an existing LBT mechanism, after LBT succeeds, a device needs to send a signal in advance to block transmission of another UE as early as possible. However, in an implementation of this embodiment of this application, the sensing device may not need to send a signal (for example, does not need to send a CPE), but may perform interference measurement by using a signal sent by the communication device. In this embodiment of this application, the sensing device may receive (or detect) a signal in at least one last time subunit in a previous time unit of a selected time unit, and the sensing device may determine, based on the received signal, whether the time unit selected by the sensing device is occupied by another device. For example, if the time unit is occupied by another device, the sensing device may not send an SL signal in the time unit. In this manner, a probability of resource collision can be reduced, and SL signal transmission quality can be improved.

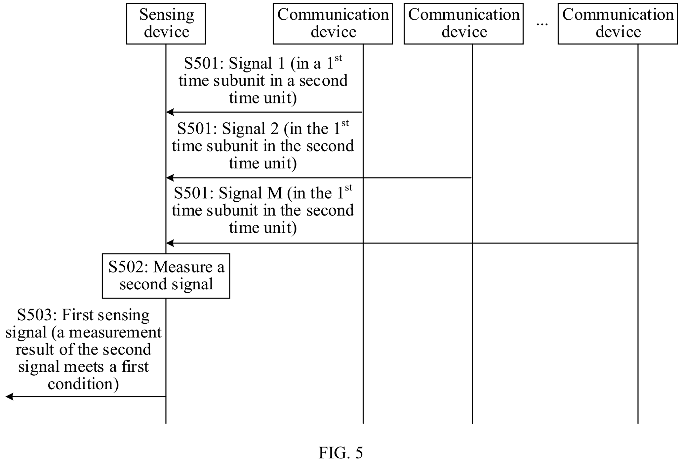

An embodiment of this application provides another communication method. FIG. 5 is a flowchart of the method.

S501: A sensing device receives a second signal in a 1^{st} time subunit in a second time unit and a third frequency domain unit set. For example, the second signal includes N signals, and N is a positive integer. The N signals may be from one or more devices, for example, from one or more communication devices (this is used as an example in FIG. 5, for example, signals sent by the communication devices are respectively referred to as a signal 1, a signal 2, ..., and a signal N). A quantity of the one or more devices is less than or equal to N, or may be greater than N. The N signals may occupy a same time domain resource, but occupy different frequency domain resources, that is, the N signals are distinguished from each other in a frequency. For example, for the sensing device, the N signals may correspond to N radio frequency links supported by the sensing device. A bandwidth of one of the radio frequency links may include several frequency domain units. Different frequency domain units may be occupied by a same device or different devices. Alternatively, different frequency domain units may be used by the sensing device to perform transmission of an SL signal with a same device or different devices.

The second time unit may be a time unit selected by the sensing device for sending a sensing signal, and the sensing signal to be sent by the sensing device may be referred to as a first sensing signal. The sensing signal includes, for example, a control signal and/or a sensing reference signal. The control signal may include SCI, or include a control signal other than the SCI. If the control signal includes the SCI, optionally, the SCI may be implemented in a form of a sequence. For example, if the sensing device has a to-be-sent first sensing signal, the sensing device performs resource selection, and selects a first resource from a resource pool configured for the sensing device. A time domain resource included in the first resource is the second time unit, and a frequency domain resource included in the first resource is a second frequency domain unit set. Before sending the sensing signal by using the first resource, the sensing device may perform signal detection in the 1^{st} time subunit in the second time unit, to determine whether the second time unit is occupied by another device (for example, the communication device). From this perspective, it may be considered that the N signals received by the sensing device are signals used for interference measurement.

For the communication device, if the second time unit is not occupied, the communication device does not send a signal in the 1^{st} time subunit in the second time unit. If the second time unit is occupied, the communication device originally sends a signal in the 1^{st} time subunit in the second time unit. Therefore, the second signal includes, for example, SL control information and/or SL data. In other words, the communication device may not need to additionally send a signal used for interference measurement, so that power consumption and transmission overheads of the communication device can be reduced. In addition, transmit power used by the communication device to send the signal in the 1^{st} time subunit may be equal to transmit power of the communication device in each remaining time subunit in the second time unit. In this way, a measurement result of the sensing device can accurately reflect interference caused by the communication device.

In the embodiment shown in FIG. 3, the sensing device performs interference measurement by using a signal sent by the communication device in at least one last time subunit in a previous time unit. As described in the embodiment shown in FIG. 3, a last time subunit in a time unit is a GAP, and is mainly used by a device to perform receive/transmit transition. For example, the sensing device performs interference measurement by using the signal sent by the communication device in the last time subunit in the previous time unit. When a subcarrier spacing is large, duration of a time subunit is short, and the communication device may not send the signal in the last time subunit in time. Alternatively, duration of sending the signal by the communication device is short, and consequently, the sensing device cannot perform interference measurement, or a result of the interference measurement is inaccurate. Therefore, in this embodiment of this application, it is considered that the sensing device may detect a signal or perform interference measurement in a 1^{st} time subunit in each time unit used to send the sensing signal, so that accuracy of the result of the interference measurement can be improved.

Optionally, the sensing device may only receive a signal but does not send any SL signal in the 1^{st} time subunit in each time unit used by the sensing device to send the sensing signal. Alternatively, whether the sensing device can send a signal in addition to receiving a signal in the 1^{st} time subunit in each time unit used by the sensing device to send the sensing signal is related to a capability of the sensing device. For example, for a sensing device that supports a self-transmitting and self-receiving function, the sensing device can further send a signal in addition to receiving a signal in the 1^{st} time subunit in each time unit used by the sensing device to send the sensing signal. However, for a sensing device that does not support the self-transmitting and self-receiving function, the sensing device may receive a signal but does not send any SL signal in the 1^{st} time subunit in each time unit used by the sensing device to send the sensing signal. The self-transmitting and self-receiving function means that the sensing device may send the sensing signal, and may receive an echo signal reflected after the sensing signal reaches a target, and the sensing device may determine a feature of the target based on the sensing signal and the echo signal. For the sensing device that supports self-transmitting and self-receiving, if the sensing device receives a signal and sends a signal in the 1^{st} time subunit, the signal received by the sensing device in the 1^{st} time subunit may include a signal (for example, the second signal) from the communication device, and may further include an echo signal of the sensing signal (for example, referred to as a second sensing signal) sent by the sensing device. The sensing device may cancel the echo signal from the received signal. After the echo signal is canceled, the sensing device measures the second signal, or determines whether a measurement result of the second signal meets a first condition.

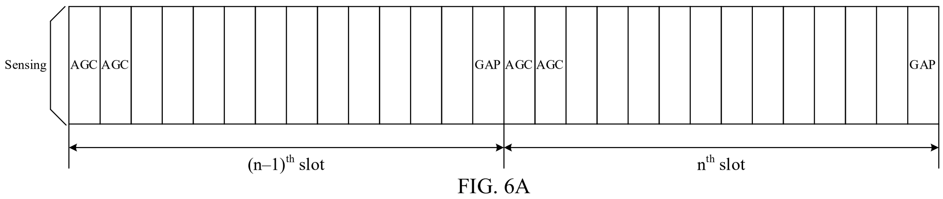

An example in which the time unit is a slot is used. According to an existing slot structure, a 1^{st} symbol in a slot is used by a receiving device to adjust a power amplifier, and perform automatic gain control (automatic gain control, AGC). If the sensing device only receives a signal but does not send an SL signal in a 1^{st} symbol in a slot, for a time domain unit (for example, a slot) in a sensing resource pool, a symbol used for AGC is postponed from a 1^{st} symbol to a 2^{nd} symbol, as shown in FIG. 6A. In FIG. 6A, an example in which a time domain unit is a slot is used. A 1^{st} symbol in the slot is still marked as "AGC". Actually, the symbol may alternatively not be considered to be used for AGC, for example, may be considered as idle. However, because the 1^{st} symbol is not used to send the SL signal, a quantity of symbols used to send the sensing signal is also reduced. The sensing device used as a receive end may perform AGC by using a 2^{nd} symbol, or the sensing device at the receive end may directly start receiving from the 2^{nd} symbol. For the communication device, if an existing slot structure is still used, that is, AGC is performed on the 1^{st} symbol, adjustment of the power amplifier may be inaccurate. As described above, the sensing device does not send any SL signal on a 1^{st} symbol in each slot. However, when the result of the interference measurement is less than or equal to a corresponding threshold (a first threshold or a second threshold), the sensing device sends the sensing signal on another symbol in the slot. In this way, for the communication device at the receive end, received power on the 1^{st} symbol is less than received power on the 2^{nd} symbol. Therefore, an AGC result of the communication device at the receive end on the 1^{st} symbol is inaccurate, and a large clipping error or quantization error may be caused.

Therefore, if the sensing device does not send an SL signal in a 1^{st} time subunit in a time unit, a structure of the time unit may be correspondingly changed. For example, a 2^{nd} time subunit in the second time unit may be used for AGC. It may be considered that both first two time subunits in a time unit are used for AGC, where a 1^{st} time subunit used for AGC may be used by the sensing device to perform interference measurement, and a 2^{nd} time subunit used for AGC may be used by the communication device at the receive end to perform AGC. Alternatively, a 1^{st} time subunit in a time unit may not be considered to be used for AGC. Optionally, the 1^{st} time subunit in the second time unit may be copied from the 2^{nd} time subunit in the second time unit, information carried in the 1^{st} time subunit may be a repetition of information carried in the 2^{nd} time subunit, or the 1^{st} time subunit may be set to a demodulation reference signal (demodulation reference signal, DMRS) corresponding to a physical sidelink shared channel (physical sidelink shared channel, PSSCH). The 2^{nd} time subunit in the second time unit may be copied from a 3^{rd} time subunit in the second time unit, information carried in the 2^{nd} time subunit may be a repetition of information carried in the 3^{rd} time subunit, or the 2^{nd} time subunit may be set to a DMRS corresponding to a PSSCH.

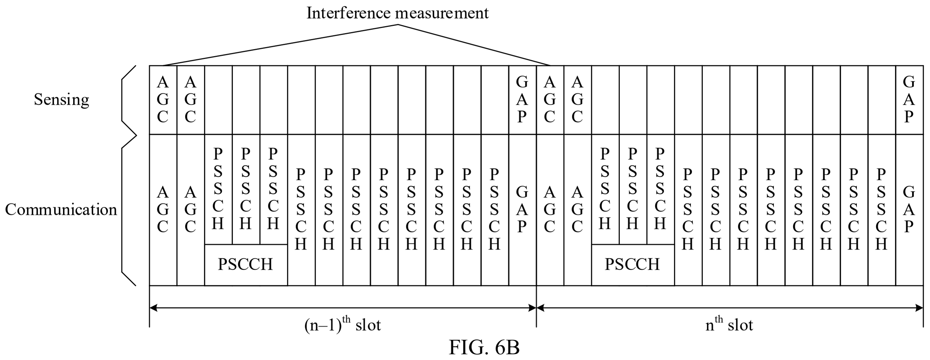

Refer to FIG. 6B. An example in which a time unit is a slot is used. In the sensing resource pool, a 1^{st} symbol in a slot is not used to send any SL signal (where the 1^{st} symbol is still marked as AGC in FIG. 6B, and actually, the symbol may alternatively not be considered to be used for AGC), the 1^{st} symbol may be used by the sensing device to perform interference measurement, and a 2^{nd} symbol in a slot may be used for AGC. In a communication resource pool, both first two symbols in a slot may be used for AGC, or a 1^{st} symbol in a slot may not be considered to be used for AGC. In FIG. 6B, an example in which the 1^{st} symbol is marked as AGC is used.

The communication device used as a transmit end may still send a signal in first two time subunits in a time unit. For information carried in the time subunit, refer to the foregoing descriptions. The communication device used as the receive end may receive a signal in first two time subunits in a time unit. The communication device at the receive end uses only a 2^{nd} time subunit in the time unit for AGC, and does not use a 1^{st} time subunit for AGC, for example, ignores information carried in the 1^{st} time subunit.

Optionally, if both the sensing device that supports the self-transmitting and self-receiving function and the sensing device that does not support the self-transmitting and self-receiving function exist in a communication system; or the sensing device that does not support the self-transmitting and self-receiving function exists in a communication system, but the sensing device that supports the self-transmitting and self-receiving function does not exist in the communication system, the communication system may use a new time unit structure provided in this embodiment of this application. For example, the new time unit structure may be configured together with a resource pool.

Alternatively, if the sensing device that supports the self-transmitting and self-receiving function exists in a communication system, but the sensing device that does not support the self-transmitting and self-receiving function does not exist in the communication system, the communication system may use an original time unit structure instead of a new time unit structure. In this way, a quantity of time subunits used to send a signal in a time unit can be increased. In this case, the communication device used as the receive end may continue to perform AGC by using a 1^{st} time subunit in a time unit. Although the sensing device may not send a signal in a subsequent time subunit in the time unit (for example, the result of the interference measurement of the sensing device is greater than the first threshold or the second threshold), this only causes received power of the communication device in the subsequent time subunit to be less than received power in the 1^{st} time subunit, and impact on the communication device is small.

The second signal may be carried in the third frequency domain unit set, and the third frequency domain unit set and the second frequency domain unit set may not overlap. For example, the third frequency domain unit set belongs to a third resource pool, and the second frequency domain unit set belongs to a second resource pool. The third resource pool is a resource pool configured for the communication device, and may be referred to as a communication resource pool. For example, the third resource pool includes one or more communication resource pools. The second resource pool is a resource pool configured for the sensing device, and may be referred to as a sensing resource pool. The third resource pool and the first resource pool in the embodiment shown in FIG. 3 may be a same resource pool, a resource pool included in the first resource pool is the same as a resource pool included in the third resource pool, the first resource pool and the third resource pool may be different resource pools, or a resource pool included in the first resource pool and a resource pool included in the third resource pool may have an intersection or have no intersection. The third resource pool and the second resource pool may be frequency-divided, as shown in FIG. 1. In a case of frequency division, the third resource pool may include one or more subchannels, or include one or more PRBs; and the second resource pool may include one or more subchannels, or include one or more PRBs. Alternatively, the third resource pool and the second resource pool may be combed. For example, the second resource pool may include one or more interlaces, and/or the third resource pool may include one or more interlaces. In a combing manner, the sensing device may occupy only a small quantity of frequency domain resources while obtaining a large bandwidth, and spectrum utilization is high.

If the third resource pool and the second resource pool are combed, and both the third resource pool and the second resource pool include interlaces, optionally, the interlace included in the third resource pool is adjacent to the interlace included in the second resource pool in frequency domain. For example, the third resource pool includes interlaces whose indexes are 0, 2, 3, and 4, and the first resource pool includes an interlace whose index is 1. In this case, the interlace whose index is 1 is adjacent to both the interlaces whose indexes are 0 and 2 in frequency domain.

For more content of the third frequency domain unit set and the second frequency domain unit set, refer to descriptions of the first frequency domain unit set and the second frequency domain unit set in the embodiment shown in FIG. 3. The "first frequency domain unit set" in the embodiment shown in FIG. 3 may be replaced with the "third frequency domain unit set".

The sensing device may detect a signal in a range of a second bandwidth. For example, the second frequency domain unit set is included in the range of the second bandwidth; or both the third frequency domain unit set and the second frequency domain unit set are included in the range of the second bandwidth. The second bandwidth may include one or more first bandwidths. For descriptions of the first bandwidth and the second bandwidth, refer to the embodiment shown in FIG. 3.

S502: The sensing device measures the second signal.

In this embodiment of this application, before sending the sensing signal by using the first resource, the sensing device may perform signal detection in the 1^{st} time subunit in the second time unit, to determine whether the second time unit is occupied by another device (which is mainly the communication device). In a detection process, the sensing device may receive a signal from another device, or may not receive a signal from another device. If the sensing device does not receive a signal from another device in the detection process, S502 may not need to be performed. The sensing device may send the first sensing signal in the second time unit and the second frequency domain unit set, and in this case, it is considered that the second time unit is idle. Alternatively, if the sensing device receives a signal from another device in the detection process, for example, receives the second signal, the sensing device may measure the second signal. The sensing device may measure each of the N signals. For example, the sensing device may obtain one measurement value by measuring one signal. If the sensing device measures the N signals, N measurement values may be obtained, and the N measurement values are in one-to-one correspondence with the N signals. For example, the sensing device may measure a part or all of the N signals to obtain a measurement result. The measurement result may include measurement values of the part or all of the N signals.

S503: The sensing device sends the first sensing signal in the second time unit and the second frequency domain unit set when the measurement result of the second signal meets the first condition. The sensing device does not send the first sensing signal or any SL signal in the second time unit and the second frequency domain unit set when the measurement result of the second signal does not meet the first condition. A receive end of the first sensing signal may include one or more communication devices described in S501, or may not include these devices, but may include another target object.

For example, if the measurement result of the second signal meets the first condition, it indicates that the second time unit is idle, and therefore, the sensing device may send the first sensing signal in the second time unit. However, if the measurement result of the second signal does not meet the first condition, it indicates that the second time unit is busy, and the sensing device may not send the sensing signal in the second time unit, or the sensing device may not send any SL signal in the second time unit.

Optionally, the first condition includes that a measurement value of any one of the N signals is less than the first threshold, includes that a measurement value of each of the N signals is less than the first threshold, or includes that a total measurement value of the N signals is less than the second threshold.

For example, any one of the N signals is a fifth signal. When the measurement value of the fifth signal measured by the sensing device is greater than or equal to the first threshold, in the second time unit, the sensing device may not send the first sensing signal in the second frequency domain unit set. Alternatively, when the measurement value of the fifth signal measured by the sensing device is less than the first threshold, in the second time unit, the sensing device may send the first sensing signal in the second frequency domain unit set. In this case, the second frequency domain unit set is a frequency domain component in the first bandwidth. For example, transmission of the fifth signal occupies a part or all of frequency domain resources corresponding to one first bandwidth, and the first bandwidth is referred to as a first bandwidth B. Based on this determining result, the sensing device sends or does not send the first sensing signal on the frequency domain resource corresponding to the first bandwidth B. In other words, the sensing device may separately determine the N measurement values, and may determine, based on a determining result of one measurement value, whether to send the sensing signal in a first bandwidth corresponding to the measurement value. For example, if another signal in the N signals is a sixth signal, the measurement value of the fifth signal measured by the sensing device is greater than or equal to the first threshold, and a measurement value of the sixth signal is less than the first threshold, in the second time unit, the sensing device may not send the sensing signal in the first bandwidth corresponding to the fifth signal, but may send the sensing signal in a first bandwidth corresponding to the sixth signal. In this determining manner, a dependency relationship between sensing signals can be weakened, and a transmission delay of the sensing signal can be reduced.

Alternatively, when the measurement value of the fifth signal measured by the sensing device is greater than or equal to the first threshold, in the second time unit, the sensing device may not send the first sensing signal in the second frequency domain unit set. Alternatively, when the measurement value of the fifth signal measured by the sensing device is less than the first threshold, in the second time unit, the sensing device may send the first sensing signal in the second frequency domain unit set. In this case, the second frequency domain unit set is a frequency domain component in the second bandwidth. In other words, the sensing device may only determine any measurement value, and a determining result of the measurement value may be used to determine whether to send the sensing signal in the second bandwidth. In this determining manner, the sensing device may only measure any received signal, and does not need to measure all received signals, so that power consumption caused by measurement can be reduced.

Alternatively, when the measurement value of any one of the N signals measured by the sensing device is greater than or equal to the first threshold, in the second time unit, the sensing device may not send the first sensing signal in the second frequency domain unit set. Alternatively, when the measurement value of each of the N signals measured by the sensing device is less than the first threshold, in the second time unit, the sensing device may send the first sensing signal in the second frequency domain unit set. In this case, the second frequency domain unit set is a frequency domain component in the second bandwidth. In other words, the sensing device may determine each of the N measurement values, to determine whether to send the sensing signal in the second bandwidth, so that accuracy of a determining result can be improved.

Alternatively, when the total measurement value of the N signals measured by the sensing device is greater than or equal to the second threshold, in the second time unit, the sensing device may not send the first sensing signal in the second frequency domain unit set. Alternatively, when the total measurement value of the N signals measured by the sensing device is less than the second threshold, in the second time unit, the sensing device may send the first sensing signal in the second frequency domain unit set. In this case, the second frequency domain unit set is a frequency domain component in the second bandwidth. In this manner, the sensing device may measure all the N signals to obtain the N measurement values, and may obtain the total measurement value based on the N measurement values. For example, the total measurement value may be a sum of the N measurement values, may be a weighted sum of the N measurement values, may be an arithmetic average value or a weighted average value of the N measurement values, or may be a value obtained by using the N measurement values and another algorithm. In this determining manner, the sensing device may comprehensively determine, based on the total measurement value of the N signals, whether to send the sensing signal in the second bandwidth. This helps improve accuracy of a determining result.

For descriptions of concepts such as the frequency domain component in the first bandwidth or the second bandwidth, refer to the embodiment shown in FIG. 3. For features such as the measurement value, the first threshold, and the second threshold, refer to descriptions of the embodiment shown in FIG. 3.

The sensing device sends the first sensing signal in the second time unit and the second frequency domain unit set. For example, in an optional sending manner, the sensing device sends the first sensing signal in the second frequency domain unit set by using the 2^{nd} time subunit in the second time unit as a start time domain position. It is equivalent to that the sensing device may immediately send the sensing signal after the interference measurement ends, and does not need to wait for corresponding time, so that the transmission delay of the sensing signal can be reduced.

In this embodiment of this application, optionally, the sensing device may not need to perform LBT. Therefore, the sensing device does not need to listen to a channel prematurely, and power consumption can be reduced. In this embodiment of this application, the sensing device may receive (or detect) a signal in a 1^{st} time subunit in a selected time unit, and the sensing device may determine, based on the received signal, whether the time unit selected by the sensing device is occupied by another device. For example, if the time unit is occupied by another device, the sensing device may not send SL data in the time unit. In this manner, a probability of resource collision can be reduced, and SL data transmission quality can be improved. In addition, the communication device does not need to additionally send a signal for the sensing device to perform interference measurement, so that the power consumption of the communication device can be reduced.

The embodiment shown in FIG. 5 and the embodiment shown in FIG. 3 may be applied in combination. For example, the sensing device may detect a signal in both the at least one last time subunit in the first time unit and the 1^{st} time subunit in the second time unit. If the sensing device receives both the first signal and the second signal, the sensing device may determine, based on the first signal and the second signal, whether the first condition is met. For example, the first condition includes that the measurement value of any one of the M signals is less than the first threshold, includes that the measurement value of each of the M signals is less than the first threshold, includes that the total measurement value of the M signals is less than the second threshold, includes that the measurement value of any one of the N signals is less than the first threshold, includes that the measurement value of each of the N signals is less than the first threshold, includes that the total measurement value of the N signals is less than the second threshold, includes that both the measurement value of any one of the M signals and the measurement value of any one of the N signals are less than the first threshold, includes that both the measurement value of each of the M signals and the measurement value of each of the N signals are less than the first threshold, or includes that a total measurement value of the M signals and the N signals is less than the second threshold. The total measurement value of the M signals and the N signals may be obtained based on the M measurement values and/or the N measurement values, for example, may be a sum of the M measurement values and the N measurement values, may be a weighted sum of the M measurement values and the N measurement values, may be an arithmetic average value or a weighted average value of the M measurement values and the N measurement values, or may be a value obtained by using the M measurement values, the N measurement values, and another algorithm. Alternatively, M may be equal to N, and T measurement values (T=M=N) may be obtained based on the M signals and the N signals. One of the T measurement values may be a sum of two measurement values that correspond to a same first bandwidth and that are in the M signals and the N signals, a weighted sum of the two measurement values, an arithmetic average value of the two measurement values, a weighted average value of the two measurement values, or a value obtained by using the two measurement values and another algorithm. Optionally, the first condition further includes that any one of the T measurement values is less than the first threshold, or includes that each of the T measurement values is less than the first threshold.

For example, any one of the M signals is the third signal, and any one of the N signals is the fifth signal. When measurement values of the third signal and the fifth signal measured by the sensing device are greater than or equal to the first threshold, in the second time unit, the sensing device may not send the first sensing signal in the second frequency domain unit set. Alternatively, when the measurement value of the first signal measured by the sensing device is less than the first threshold, in the second time unit, the sensing device may send the first sensing signal in the second frequency domain unit set. In this case, the second frequency domain unit set is frequency domain components in two first bandwidths. For example, the transmission of the third signal occupies all or a part of frequency domain resources corresponding to one first bandwidth, and the first bandwidth is referred to as the first bandwidth A; and the transmission of the fifth signal occupies all or a part of frequency domain resources corresponding to one first bandwidth, and the first bandwidth is referred to as the first bandwidth B. Based on this determining result, the sensing device sends or does not send the first sensing signal on the frequency domain resource corresponding to the first bandwidth A, and sends or does not send the first sensing signal on the frequency domain resource corresponding to the first bandwidth B. Alternatively, in this case, the second frequency domain unit set is the frequency domain component in the second bandwidth.

Alternatively, when both the measurement value of each of the M signals and the measurement value of any one of the N signals that are measured by the sensing device are greater than or equal to the first threshold, in the second time unit, the sensing device may not send the first sensing signal in the second frequency domain unit set. Alternatively, when both the measurement value of each of the M signals and the measurement value of each of the N signals that are measured by the sensing device are less than the first threshold, in the second time unit, the sensing device may send the first sensing signal in the second frequency domain unit set. In this case, the second frequency domain unit set is the frequency domain component in the second bandwidth.

Alternatively, when the measurement value of any one of the M signals measured by the sensing device is greater than or equal to the first threshold, in the second time unit, the sensing device may not send the first sensing signal in the second frequency domain unit set. Alternatively, when the measurement value of each of the M signals measured by the sensing device is less than the first threshold, in the second time unit, the sensing device may send the first sensing signal in the second frequency domain unit set. In this case, the second frequency domain unit set is the frequency domain component in the second bandwidth.

Alternatively, when the measurement value of any one of the N signals measured by the sensing device is greater than or equal to the first threshold, in the second time unit, the sensing device may not send the first sensing signal in the second frequency domain unit set. Alternatively, when the measurement value of each of the N signals measured by the sensing device is less than the first threshold, in the second time unit, the sensing device may send the first sensing signal in the second frequency domain unit set. In this case, the second frequency domain unit set is the frequency domain component in the second bandwidth.

Alternatively, when the measurement value of the third signal measured by the sensing device is greater than or equal to the second threshold, in the second time unit, the sensing device may not send the first sensing signal in the second frequency domain unit set. Alternatively, when the measurement value of the third signal measured by the sensing device is less than the second threshold, in the second time unit, the sensing device may send the first sensing signal in the second frequency domain unit set. In this case, the second frequency domain unit set is the frequency domain component in the second bandwidth, a component that is in the second bandwidth and that corresponds to a frequency domain resource of the M signals, or a frequency domain component in one first bandwidth. For example, the transmission of the third signal occupies all or a part of frequency domain resources corresponding to one first bandwidth, and the first bandwidth is referred to as the first bandwidth A. Based on this determining result, the sensing device sends or does not send the first sensing signal on the frequency domain resource corresponding to the first bandwidth A.

Alternatively, when the measurement value of the fifth signal measured by the sensing device is greater than or equal to the second threshold, in the second time unit, the sensing device may not send the first sensing signal in the second frequency domain unit set. Alternatively, when the measurement value of the fifth signal measured by the sensing device is less than the second threshold, in the second time unit, the sensing device may send the first sensing signal in the second frequency domain unit set. In this case, the second frequency domain unit set is the frequency domain component in the second bandwidth, a component that is in the second bandwidth and that corresponds to a frequency domain resource of the N signals, or a frequency domain component in one first bandwidth. For example, the transmission of the fifth signal occupies all or a part of frequency domain resources corresponding to one first bandwidth, and the first bandwidth is referred to as the first bandwidth B. Based on this determining result, the sensing device sends or does not send the first sensing signal on the frequency domain resource corresponding to the first bandwidth B.

Alternatively, when the total measurement value of the M signals measured by the sensing device is greater than or equal to the second threshold, in the second time unit, the sensing device may not send the first sensing signal in the second frequency domain unit set. Alternatively, when the total measurement value of the M signals measured by the sensing device is less than the second threshold, in the second time unit, the sensing device may send the first sensing signal in the second frequency domain unit set. In this case, the second frequency domain unit set is the frequency domain component in the second bandwidth.

Alternatively, when the total measurement value of the N signals measured by the sensing device is greater than or equal to the second threshold, in the second time unit, the sensing device may not send the first sensing signal in the second frequency domain unit set. Alternatively, when the total measurement value of the N signals measured by the sensing device is less than the second threshold, in the second time unit, the sensing device may send the first sensing signal in the second frequency domain unit set. In this case, the second frequency domain unit set is the frequency domain component in the second bandwidth.

Alternatively, when the total measurement value of the M signals and the N signals measured by the sensing device is greater than or equal to the second threshold, in the second time unit, the sensing device may not send the first sensing signal in the second frequency domain unit set. Alternatively, when the total measurement value of the M signals and the N signals measured by the sensing device is less than the second threshold, in the second time unit, the sensing device may send the first sensing signal in the second frequency domain unit set. In this case, the second frequency domain unit set is the frequency domain component in the second bandwidth.

Alternatively, when any one of the T measurement values is greater than or equal to the first threshold, in the second time unit, the sensing device may not send the first sensing signal in the second frequency domain unit set. Alternatively, when any one of the T measurement values is less than the first threshold, in the second time unit, the sensing device may send the first sensing signal in the second frequency domain unit set. In this case, the second frequency domain unit set is the frequency domain component in the second bandwidth or the frequency domain component in the first bandwidth.

Alternatively, when any one of the T measurement values is greater than or equal to the first threshold, in the second time unit, the sensing device may not send the first sensing signal in the second frequency domain unit set. Alternatively, when each of the T measurement values is less than the first threshold, in the second time unit, the sensing device may send the first sensing signal in the second frequency domain unit set. In this case, the second frequency domain unit set is a frequency domain component in the second bandwidth.

Alternatively, the embodiment shown in FIG. 5 and the embodiment shown in FIG. 3 may not be combined, but are separately applied.

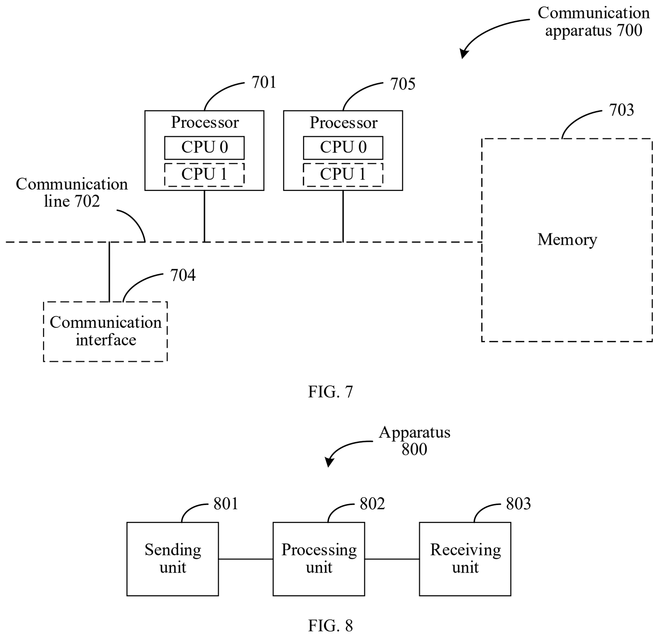

FIG. 7 is a diagram of a structure of a communication apparatus according to an embodiment of this application. The communication apparatus 700 may be the sensing device in the embodiment shown in FIG. 3 or FIG. 5 or a circuit system of the sensing device, and is configured to implement the methods corresponding to the sensing device in the foregoing method embodiments. Alternatively, the communication apparatus 700 may be the communication device in the embodiment shown in FIG. 3 or FIG. 5 or a circuit system of the communication device, and is configured to implement the methods corresponding to the communication device in the foregoing method embodiments. For example, a circuit system is a chip system.

The communication apparatus 700 includes at least one processor 701. The processor 701 may be configured to perform internal processing of the apparatus, to implement a specific control processing function. Optionally, the processor 701 includes instructions. Optionally, the processor 701 may store data. Optionally, different processors may be independent components, may be located at different physical positions, or may be located on different integrated circuits. Optionally, different processors may be integrated into one or more processors, for example, integrated into one or more integrated circuits.

Optionally, the communication apparatus 700 includes one or more memories 703, configured to store instructions. Optionally, the memory 703 may further store data. The processor and the memory may be separately disposed, or may be integrated together.

Optionally, the communication apparatus 700 includes a communication line 702 and at least one communication interface 704. Because the memory 703, the communication line 702, and the communication interface 704 are all optional, the memory 703, the communication line 702, and the communication interface 704 are all represented by dashed lines in FIG. 7.

Optionally, the communication apparatus 700 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 700 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 701 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 702 may include a path for transferring information between the foregoing components.

The communication interface 704 uses any apparatus like a transceiver, and is configured to communicate with another device or a communication network, for example, an ethernet, a radio access network (radio access network, RAN), a wireless local area network (wireless local area network, WLAN), or a wired access network.

The memory 703 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory 703 may exist independently, and is connected to the processor 701 through the communication line 702. Alternatively, the memory 703 may be integrated with the processor 701.

The memory 703 is configured to store computer-executable instructions for executing the solutions of this application, and the processor 701 controls the execution. The processor 701 is configured to execute the computer-executable instructions stored in the memory 703, to implement the steps performed by the sensing device or the communication device in the embodiment shown in FIG. 3 or FIG. 5.

Optionally, the computer-executable instructions in this embodiment of this application may also be referred to as application program code. This is not specifically limited in this embodiment of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and a processor 705 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 7 is a chip, for example, a chip of the sensing device or a chip of the communication device, the chip includes the processor 701 (which may further include the processor 705), the communication line 702, and the communication interface 704. Optionally, the chip may include the memory 703. Specifically, the communication interface 704 may be an input interface, a pin, a circuit, or the like. The memory 703 may be a register, a cache, or the like. The processor 701 and the processor 705 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. For example, when each functional module is obtained through division based on each corresponding function, FIG. 8 is a diagram of an apparatus. The apparatus 800 may be the sensing device or the communication device in the foregoing method embodiments, or a chip of the sensing device or a chip of the communication device. The apparatus 800 includes a sending unit 801, a processing unit 802, and a receiving unit 803.

It should be understood that the apparatus 800 may be configured to implement the steps performed by the sensing device or the communication device in the communication methods in embodiments of this application. For related features, refer to the embodiment shown in FIG. 3 or FIG. 5. Details are not described herein again.

Optionally, functions/implementation processes of the sending unit 801, the receiving unit 803, and the processing unit 802 in FIG. 8 may be implemented by the processor 701 in FIG. 7 by invoking computer-executable instructions stored in the memory 703. Alternatively, a function/an implementation process of the processing unit 802 in FIG. 8 may be implemented by the processor 701 in FIG. 7 by invoking computer-executable instructions stored in the memory 703, and functions/implementation processes of the sending unit 801 and the receiving unit 803 in FIG. 8 may be implemented through the communication interface 704 in FIG. 7.

Optionally, when the apparatus 800 is a chip or a circuit, the functions/implementation processes of the sending unit 801 and the receiving unit 803 may alternatively be implemented by a pin, a circuit, or the like.

This application further provides a computer-readable storage medium. The computer-readable storage medium stores a computer program or instructions. When the computer program or the instructions are run, the methods performed by the sensing device or the communication device in the foregoing method embodiments are implemented. In this way, the functions in the foregoing embodiments may be implemented in a form of a software functional unit and sold or used as an independent product. Based on such an understanding, the technical solutions of this application essentially, or a contributing part, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the sensing device or the communication device in any one of the foregoing method embodiments.

An embodiment of this application further provides a processing apparatus, including a processor and an interface. The processor is configured to perform the method performed by the sensing device or the communication device in any one of the foregoing method embodiments.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logic units and circuits described in embodiments of this application may implement or operate the described functions by using a general-purpose processor, a digital signal processor (digital signal processor, DSP), an ASIC, a field programmable gate array (field programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by using a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information to the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different parts of the terminal device.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that, in embodiments of this application, the sensing device and/or the communication device may perform a part or all of the steps in embodiments of this application. These steps or operations are merely examples. In embodiments of this application, other operations or variations of various operations may be further performed. In addition, the steps may be performed in a sequence different from that presented in embodiments of this application, and not all operations in embodiments of this application may be necessarily performed.

## Claims

1. A communication method, applied to a sensing device or a chip of the sensing device, wherein the method comprises:
receiving a first signal in at least one last time subunit in a first time unit and a first frequency domain unit set;
measuring the first signal; and
sending a first sensing signal in a second time unit and a second frequency domain unit set when a measurement result of the first signal meets a first condition, wherein the second time unit is a next time unit of the first time unit, and the first frequency domain unit set and the second frequency domain unit set do not overlap.

2. A communication method, applied to a communication system, wherein the communication system comprises a sensing device or a chip of the sensing device, and comprises a communication device or a chip of the communication device, and the method comprises:
sending, by the communication device, a first signal in at least one last time subunit in a first time unit and a first frequency domain unit set;
receiving, by the sensing device, the first signal;
measuring, by the sensing device, the first signal; and
sending, by the sensing device, a first sensing signal in a second time unit and a second frequency domain unit set when a measurement result of the first signal meets a first condition, wherein the second time unit is a resource selected by the communication device for sending sidelink data, the second time unit is a next time unit of the first time unit, and the first frequency domain unit set and the second frequency domain unit set do not overlap.

3. The method according to claim 1 or 2, wherein
the first frequency domain unit set belongs to a first resource pool, and the first resource pool comprises one or more interlaces, or comprises one or more subchannels; and/or
the second frequency domain unit set belongs to a second resource pool, and the second resource pool comprises one or more interlaces, or comprises one or more subchannels, wherein
the first resource pool is different from the second resource pool, or the first resource pool and the second resource pool do not overlap in frequency domain.

4. The method according to claim 3, wherein when the first resource pool comprises one or more interlaces, and the second resource pool comprises one or more interlaces, the interlace comprised in the first resource pool is adjacent to the interlace comprised in the second resource pool in frequency domain.

5. The method according to any one of claims 1 to 4, wherein the first frequency domain unit set and the second frequency domain unit set are comprised in a range of a second bandwidth, and the second bandwidth comprises one or more first bandwidths.

6. The method according to claim 5, wherein
the second bandwidth is a bandwidth of the second frequency domain unit set;
the second bandwidth is a bandwidth of a bandwidth part BWP currently activated by the sensing device; or
the second bandwidth is a bandwidth supported by the sensing device.

7. The method according to claim 5 or 6, wherein the first bandwidth is a bandwidth of a single radio frequency link supported by the sensing device.

8. The method according to any one of claims 1 to 7, wherein the first signal comprises M signals, M is a positive integer, each of the M signals occupies a first bandwidth, and the first condition comprises:
a measurement value of any one of the M signals is less than a first threshold;
a measurement value of each of the M signals is less than a first threshold; or
a total measurement value of the M signals is less than a second threshold.

9. The method according to claim 8, wherein
the second frequency domain unit set is a frequency domain component in the first bandwidth or the second bandwidth when the measurement value of any one of the M signals is less than the first threshold;
the second frequency domain unit set is a frequency domain component in the second bandwidth when the measurement value of each of the M signals is less than the first threshold; or
the second frequency domain unit set is a frequency domain component in the second bandwidth when the total measurement value of the M signals is less than the second threshold.

10. The method according to claim 9, wherein that the second frequency domain unit set is the frequency domain component in the first bandwidth when the measurement value of any one of the M signals is less than the first threshold comprises:
the second frequency domain unit set is a frequency domain component in the first bandwidth corresponding to any signal when the measurement value of any one of the M signals is less than the first threshold.

11. The method according to any one of claims 8 to 10, wherein the first threshold and/or the second threshold are/is related to one or more of a service to which the first sensing signal belongs, the first bandwidth, or the second bandwidth.

12. The method according to any one of claims 2 to 11, wherein
the method further comprises:
sending, by the communication device, the first signal in first duration in a last time subunit in the first time unit and the first frequency domain unit set, wherein the first duration is less than duration of one time subunit; and
receiving, by the sensing device, the second signal; and
sending, by the sensing device, the first sensing signal in the second time unit and the second frequency domain unit set when the measurement result of the first signal meets the first condition comprises:
sending, by the sensing device, the first sensing signal in the second time unit and the second frequency domain unit set when the measurement result of the first signal and a measurement result of the second signal meet the first condition.

13. The method according to claim 12, wherein the first time unit and/or a 2^{nd} time subunit in the second time unit are/is used for automatic gain control.

14. The method according to any one of claims 1 to 13, wherein the first signal is a cyclic prefix extension CPE.

15. The method according to any one of claims 2 to 14, wherein transmit power of the communication device in each of the at least one last time subunit is equal to transmit power of the communication device in each time subunit in the second time unit.

16. The method according to any one of claims 2 to 15, wherein
the communication device does not perform listen before talk LBT, and the at least one last time subunit is the last time subunit.

17. A communication method, applied to a sensing device or a chip of the sensing device, wherein the method comprises:
receiving a second signal in a 1^{st} time subunit in a second time unit and a third frequency domain unit set;
measuring the second signal; and
sending a first sensing signal in the second time unit and a second frequency domain unit set when a measurement result of the second signal meets a first condition, wherein the third frequency domain unit set and the second frequency domain unit set do not overlap.

18. The method according to claim 17, wherein
the third frequency domain unit set belongs to a third resource pool, and the third resource pool comprises one or more interlaces, or comprises one or more subchannels; and/or
the second frequency domain unit set belongs to a second resource pool, and the second resource pool comprises one or more interlaces, or comprises one or more subchannels, wherein
the third resource pool is different from the second resource pool, or the third resource pool and the second resource pool do not overlap in frequency domain.

19. The method according to claim 18, wherein when the third resource pool comprises one or more interlaces, and the second resource pool comprises one or more interlaces, the interlace comprised in the third resource pool is adjacent to the interlace comprised in the second resource pool in frequency domain.

20. The method according to any one of claims 17 to 19, wherein the second frequency domain unit set and the third frequency domain unit set are comprised in a range of a second bandwidth, and the second bandwidth comprises one or more first bandwidths.

21. The method according to claim 20, wherein
the second bandwidth is a bandwidth of the second frequency domain unit set;
the second bandwidth is a bandwidth of a BWP currently activated by the sensing device; or
the second bandwidth is a bandwidth supported by the sensing device.

22. The method according to claim 20 or 21, wherein the first bandwidth is a bandwidth of a single radio frequency link supported by the sensing device.

23. The method according to any one of claims 17 to 22, wherein a 2^{nd} time subunit in the second time unit is used for automatic gain control.

24. The method according to any one of claims 17 to 23, wherein the second signal comprises N signals, N is a positive integer, each of the N signals occupies a first bandwidth, and the first condition comprises:
a measurement value of any one of the N signals is less than a first threshold;
a measurement value of each of the N signals is less than a first threshold; or
a total measurement value of the N signals is less than a second threshold.

25. The method according to claim 24, wherein
the second frequency domain unit set is a frequency domain component in the first bandwidth or the second bandwidth when the measurement value of any one of the N signals is less than the first threshold;
the second frequency domain unit set is a frequency domain component in the second bandwidth when the measurement value of each of the N signals is less than the first threshold; or
the second frequency domain unit set is a frequency domain component in the second bandwidth when the total measurement value of the N signals is less than the second threshold.

26. The method according to claim 25, wherein that the second frequency domain unit set is the frequency domain component in the first bandwidth when the measurement value of any one of the N signals is less than the first threshold comprises:
the second frequency domain unit set is a frequency domain component in the first bandwidth corresponding to any signal when the measurement value of any one of the N signals is less than the first threshold.

27. The method according to claim 25 or 26, wherein the first threshold and/or the second threshold are/is related to one or more of a service to which the first sensing signal belongs, the first bandwidth, or the second bandwidth.

28. The method according to any one of claims 24 to 27, wherein sending the first sensing signal in the second time unit and the second frequency domain unit set comprises:
sending the first sensing signal in the second frequency domain unit set by using the 2^{nd} time subunit in the second time unit as a start time domain position.

29. The method according to any one of claims 17 to 28, wherein
the method further comprises: receiving a first signal in at least one last time subunit in a first time unit, wherein the first time unit is a previous time unit of the second time unit; and
sending the first sensing signal in the second time unit and the second frequency domain unit set when the measurement result of the second signal meets the first condition comprises: sending the first sensing signal in the second time unit and the second frequency domain unit set when a measurement result of the first signal and the measurement result of the second signal meet the first condition.

30. The method according to claim 29, wherein receiving the first signal in the at least one last time subunit in the first time unit comprises:
receiving the first signal in first duration in a last time subunit in the first time unit, wherein the first duration is less than duration of one time subunit.

31. The method according to claim 29 or 30, wherein the first signal is a CPE.

32. A communication method, applied to a communication system, wherein the communication system comprises a sensing device or a chip of the sensing device, and comprises a communication device or a chip of the communication device, and the method comprises:
sending, by the communication device, a second signal in a second time unit, wherein a 2^{nd} time subunit in the second time unit is used for automatic gain control;
receiving, by the sensing device, the second signal in a 1^{st} time subunit in the second time unit and a third frequency domain unit set;
measuring, by the sensing device, the second signal; and
sending, by the sensing device, a first sensing signal in the second time unit and a second frequency domain unit set when a measurement result of the second signal meets a first condition, wherein the third frequency domain unit set and the second frequency domain unit set do not overlap.

33. The method according to claim 32, wherein the method further comprises:
sending, by the communication device, a first signal in at least one last time subunit in a first time unit and a first frequency domain unit set, wherein the first signal is used by the sensing device to perform interference measurement, and a next time unit of the first time unit is the second time unit.

34. The method according to claim 33, wherein the communication device does not perform LBT, and the at least one last time subunit is a last time subunit.

35. The method according to claim 33 or 34, wherein sending, by the communication device, the first signal in the at least one last time subunit in the first time unit and the first frequency domain unit set comprises:
sending the first signal in first duration in the last time subunit in the first time unit and the first frequency domain unit set, wherein the first duration is less than duration of one time subunit.

36. The method according to any one of claims 33 to 35, wherein the first signal is a CPE.

37. A communication apparatus, wherein the communication apparatus comprises a processing unit and a transceiver unit, and the processing unit is coupled to the transceiver unit, to perform the method according to any one of claims 1 and 2 to 16, or perform the method according to any one of claims 17 to 31.

38. A communication apparatus, wherein the communication apparatus comprises a processor and a memory, the memory is configured to store a computer program, and the processor is configured to execute the computer program stored in the memory, to enable the communication apparatus to perform the method according to any one of claims 1 and 2 to 16, or enable the communication apparatus to perform the method according to any one of claims 17 to 31.

39. A computer-readable storage medium, wherein the computer-readable storage medium is configured to store a computer program, and when the computer program is run on a computer, the computer is enabled to perform the method according to any one of claims 1 to 16, the computer is enabled to perform the method according to any one of claims 17 to 31, or the computer is enabled to perform the method according to any one of claims 32 to 36.

40. A computer program product, wherein the computer program product comprises a computer program, and when the computer program is run on a computer, the computer is enabled to perform the method according to any one of claims 1 to 16, the computer is enabled to perform the method according to any one of claims 17 to 31, or the computer is enabled to perform the method according to any one of claims 32 to 36.

41. A chip system, wherein the chip system comprises:
a processor and an interface, wherein the processor is configured to invoke instructions from the interface and run the instructions, and when the processor executes the instructions, the method according to any one of claims 1 and 2 to 16 is implemented, or the method according to any one of claims 17 to 31 is implemented.

42. A communication system, wherein the communication system comprises a sensing device and a communication device, wherein
the communication device is configured to send a first signal in at least one last time subunit in a first time unit and a first frequency domain unit set;
the sensing device is configured to receive the first signal;
the sensing device is further configured to measure the first signal; and
the sensing device is further configured to send a first sensing signal in a second time unit and a second frequency domain unit set when a measurement result of the first signal meets a first condition, wherein the second time unit is a resource selected by the communication device for sending sidelink data, the second time unit is a next time unit of the first time unit, and the first frequency domain unit set and the second frequency domain unit set do not overlap.

43. A communication system, wherein the communication system comprises a sensing device and a communication device, wherein
the communication device is configured to send a second signal in a second time unit, wherein a 2^{nd} time subunit in the second time unit is used for automatic gain control;
the sensing device is configured to receive the second signal in a 1^{st} time subunit in the second time unit and a third frequency domain unit set;
the sensing device is further configured to measure the second signal; and
when a measurement result of the second signal meets a first condition, the sensing device is further configured to send a first sensing signal in the second time unit and a second frequency domain unit set, wherein the third frequency domain unit set and the second frequency domain unit set do not overlap.
